# EUROPEAN PATENT SPECIFICATION

(11) **EP 2 306 815 B1**
(45) Date of publication and mention of the grant of the patent: **31.12.2014**
(21) Application number: 09760471.4
(22) Date of filing: 30.07.2009
(51) Int. Cl.: A01K 91/06, A01K 89/00

(54) **FISHING ROD WITH AUDIO/VIDEO TRANSMISSION SYSTEM**
ANGEL MIT AUDIO-/VIDEOÜBERTRAGUNGSSYSTEM
CANNE À PÊCHE ÉQUIPÉE D'UN SYSTÈME DE TRANSMISSION AUDIO/VIDÉO

(30) Priority: 31.07.2008 IT MC20080142
(43) Date of publication of application: 13.04.2011
(73) Proprietor: LTN Servotechnik GmbH, 83624 Otterfing (DE)
(72) Inventor: LUZI, Nazario, 63023 Fermo (IT); MARINI, Simone, I-63014 Montegranaro (IT)
(74) Representative: Hofmann, Ernst
(86) International application number: PCT/EP2009/005554
(87) International publication number: WO 2010/020339

(56) References cited:
- WO-A-95/02322
- JP-A- 2000 228 937
- US-A- 3 467 336
- US-A1- 2007 221 774
- US-A1- 2008 148 621

## Description

### Field of Invention

This patent application for an industrial invention concerns a fishing rod with an audio and/or video (Video Capture) signal transmission system, in general for fishing and low cost documentaries.

In particular, the invention relates to sports fishing, and especially to the technique called 'trolling'. Trolling is practised worldwide, mainly as a recreational activity, with the use of specific equipment which is easily available. This sport can be practised in seas all over the world without limitations, and there is a thriving tourist business connected to fishing trips and holidays in very famous resorts.

### Background

One of the most important aspects connected to catching fish is that of documenting the quality of the catch, which is mostly photographic. Once the fish is hauled into the boat it is filmed or immortalised as proof of the person's ability, regardless of whether or not it is then released or kept. Actually, the most important part which should be documented is the phase where the fish is caught in the water, from the moment the fish notices the bait to the point where it is brought into the boat, going through the `combat' phase with the fish's resistance to being caught.

Trolling is carried out with a fishing line coming from the rod in the boat, which varies in length between roughly thirty and sixty metres, and this poses serious limitations of a technical nature for using a device which can film the fish while it is being caught.

Indeed to film the catch it is necessary to construct a device comprising a camera, transmission equipment, a power supply system, and a receiver. The video capture device has to be submerged in the water and must be small in size, it shouldn't obstruct fishing activity, it should allow acceptable operational autonomy, and it should be easy to handle.

One way to achieve this type of video filming is to include the electric cables for the video signal on the fishing line. However, it must be considered that the fishing line is wound onto a spool via the reel on the rod. Therefore technical difficulties arise in connecting the electric cables on the fishing line to a receiver suitable for receiving the video signal transmitted by the cables.

WO 95/02322 A discloses a fishing rod according to the preamble of independent claim 1.

### Disclosure of invention

The aim of this invention is to solve these problems by providing a fishing rod with an audio/video transmission system which is reliable, efficient, versatile, and suited to any type of fishing.

This aim is achieved in accordance with the invention with the specifications listed in appended patent claim I.

Advantages of the invention are demonstrated in the related patent claims.

In accordance with the invention, the fishing rod comprises:
- a support rod to be held by the user
- a fishing line assembly supported by this rod
- a reel connected to the rod to wind/unwind the fishing line onto a spool.

The fishing line assembly includes a wired transmission line connected to a transmitter unit, comprising acquisition equipment to receive an audio/video signal, and transmission equipment to send this audio/video signal along the wired transmission line.

The spool on the reel comprises additional signal transmission equipment connected to this wired transmission line which sends the audio/video signal to a receiver placed near the user.

The additional signal transmission equipment can be by means of sliding contacts or, alternatively, a radio-frequency transmitter.

The benefits offered by the video filming system are evident in accordance with the invention. Indeed, via the additional transmission equipment in the spool on the reel, continuity of audio/video signal transmission to a receiver that can be connected to a sound speaker/video monitor is guaranteed.

### Detailed description

Further specifications of the invention can be seen more clearly from the detailed description which follows, attributed to construction models which are purely illustrative and not limited to these models, illustrated in the appended designs where:
Fig. 1 is a schematic view of a fishing rod according to the invention, used for troll fishing;
Fig. 2 is an enlarged view of an audio/video signal acquisition device attached to the fishing line on the rod in Fig. 1;
Fig. 3 is a cross-sectional view of the fishing line on the rod in Fig. 1, taken along section plane III-III in Fig. 2;
Fig. 4 is a perspective view of the reel on the fishing rod according to the invention;
Fig. 5 is a perspective view of a spool, which does not form part of the present invention, on the reel in Fig. 4;
Fig. 6 is a front view of the flange on the spool in Fig. 4, taken from the side turned towards the spool;
Fig. 7 is a side view, partially sectioned, illustrating the spool in Fig. 5 fitted to the flange in Fig. 6;
Fig. 8 is a perspective view of the reel taken from a different angle with respect to Fig. 4;
Fig. 9 is an axial section view illustrating a reel on the fishing rod, according to the invention;
Fig. 10 is an axial section view illustrating preferred features of the reel on the fishing rod, according to the invention;

With the aid of the diagrams, the fishing rod with audio/video transmission system will now be described according to the invention, referred to overall with reference number (100).

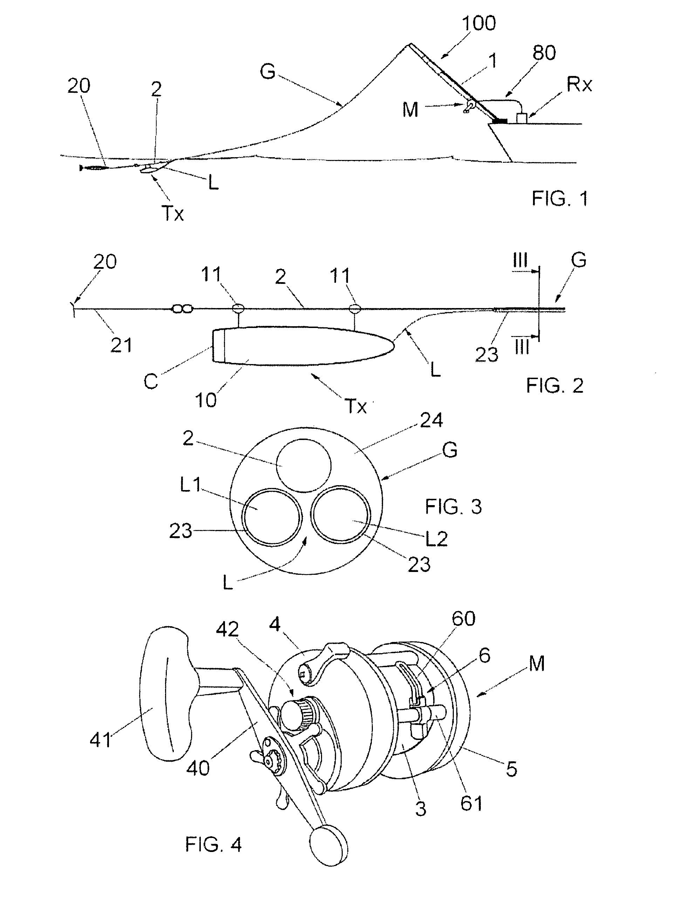

Fig. 1 illustrates a fishing rod (100), in particular for troll fishing. The fishing rod (100) comprises a standard rod (1) which is anchored to a boat, for example. The rod (1) supports a length of fishing line (2) which leads to a hook at one end (20), for bait as required. The fishing line (2) can be wound in using a reel (M) on the rod (1).

Fig. 2 illustrates a transmitter unit (Tx) to be placed near the hook (20), whereas a receiver unit (Rx) (Fig. 1) is placed near the user, on the boat as required. The transmitter unit (Tx) is connected to the receiver unit (Rx) via a wired transmission line (L). The wired transmission line (L) is a part of fishing line placed next to the fishing line (2) such as to form a fishing line assembly (G) which can be wound in with the reel (M).

The transmitter unit (Tx) comprises a video acquisition device, such as a camera for instance, and/or an audio acquisition device such as a microphone, and transmission circuitry for sending the audio/video signal acquired by the microphone/camera along the wired transmission line (L).

The transmission line (L) is a UTP type cable which comprises only a couple of wires which are not shielded or twisted (L1, L2), as shown in Fig. 3. The wires (L1, L2) are preferably a multi-wire design, made up of many copper strands. The UTP cables reduces audio/video signal noise and interference which gets transmitted. It should be noted that the UTP cable is around 1mm in diameter and therefore does not hinder fishing activities.

A technique which minimises video signal noise has been used, whereby phase problems introduced by the circuit itself are contained.

As shown in Fig. 2, the transmitter unit (Tx) is inside waterproof casing (10) which is oblong with the camera on the end (C), turned towards the end section (21) of the fishing line where the hook (20) is attached. The body (10) of the transmitter is fixed to the fishing line (2), by means of ringed fasteners (11) for example, this way the transmitter unit (Tx) is kept near the bait.

The UTP cable (L) is connected to the back of the body (10) of the transmitter (Tx), and is parallel inside the fishing line (2). Electrical connection of the UTP cable (L) is not disturbed by the fish being caught and does not hinder fishing action, as the fishing line assembly (G) comprising both the UTP cable (L) and the fishing line (2), is wound back on board the boat via the reel (M), which can be manual or automatic.

As shown in Fig. 3, in order to make the fishing line assembly (G) as small as possible, the electric wires (L1, L2) of the UTP cable have enamel insulation (23) (such as that used for wires in electric transformers), rather than insulating sheath. As a result it is possible to obtain a considerable reduction in the total section size of the UTP cable.

In this particular case braided fishing line is used (2) which ensures sufficient mechanical resistance with a limited section. The UTP cable (L) and the braided line (2) are covered with a micro-sheath (24) such as that used on some types of fishing lines. Consequently, a fishing line assembly (G) is obtained which comprises the braided line (2) and the UTP cable (L), both covered with the sheath (24). The fishing line is attached to the reel (M) on the fishing rod (1), which provides for some modifications in order to manage the electric signal brought from the UTP cable (L).

The total dimensions of the fishing line (G), considering the multi-wire electrical cables (L1, L2) with a measurement of 26AWG-24AWG, could be contained to a diameter of 1.8-2mm. The choice of multi-wire cables (L1, L2) provides better softness and flexibility compared with single-wire cables. Fig. 4 illustrates the reel (M) which comprises a spool (3) for winding in the fishing line assembly (G). The spool (3) is assembled rotationally between two fixed flanges (4,5). On the outer surface of the first flange (4) there is a control lever (40) with a handle (41) for the user to turn the lever (40). This lever (40) rotates the reel in order to wind in the fishing line assembly (G). A clutch unit (42) can be placed on the first flange (4) to regulate the winding/unwinding speed of the fishing line assembly (G).

A line guide device (6) distributes the fishing line assembly (G) uniformly on the spool (3). The line guide device (6) has a slot (60) through which the fishing line passes. The slot (60) is horizontally pivoted on a column (61) between the two fixed flanges (4,5). Furthermore, the slot (60) can slide in an alternating motion on the column (61) such as to distribute the fishing line over the whole surface of the spool (3).

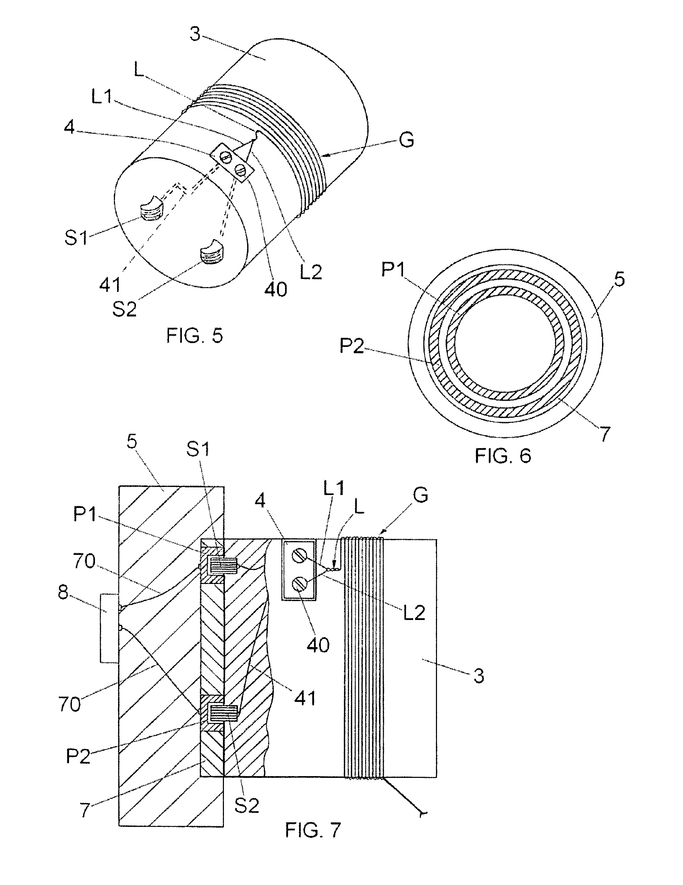

As shown in Fig. 5, the fishing line (G) is wound onto the spool (3). The UTP cable (L) is extracted from the end of the fishing line assembly. The strands of the two UTP cable wires (L1, L2) are attached to the terminals of an electric connector (4) encased in the reel (3). The electric connector (4) is encased in the spool (3) to avoid protruding parts which may hinder winding of the fishing line assembly (G).

The two electric contacts of the connector (4) are electrically connected, via electric cables (41), to respective conductive brushes (S1, S2) which protrude externally from the front surface of the spool (3). The electrical connection cables (41) are integrated into the spool (3) and the brushes (S1, S2) are placed peripherally on the circular surface of the spool (3). The first brush (S1) is more peripheral to the second brush (S2), to be exact.

As shown in Fig. 6, the second fixed flange (5) on the reel (M) has a circular support (7) placed on its circular surface turned towards the spool (3). On the support (7) there are two conductive trace (P1, P2) arranged concentrically and co-axially to the axis of the flange (5). The first trace (P1) has a larger diameter than the second trace (P2).

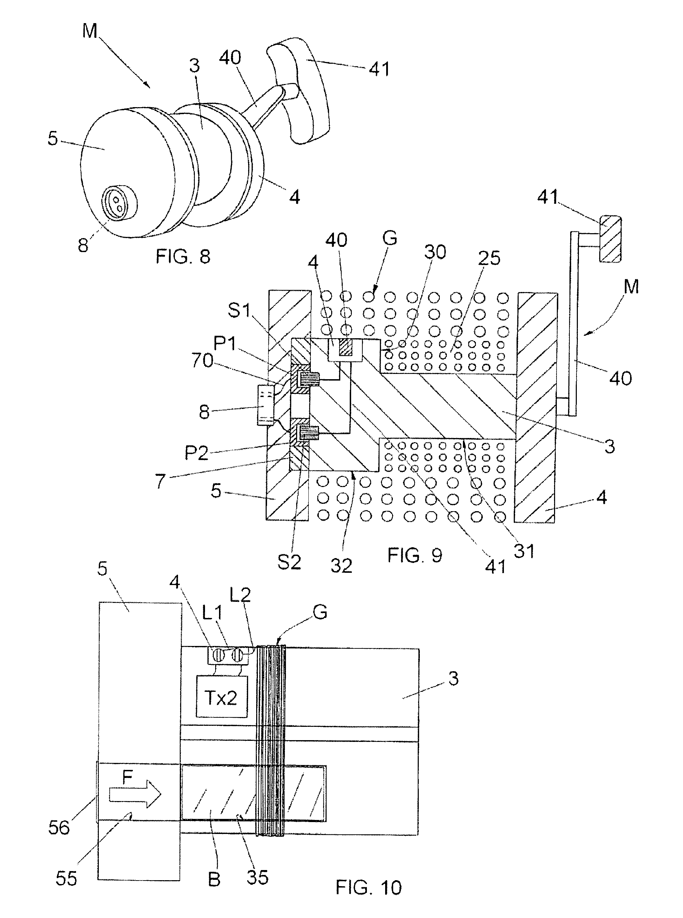

As shown in Fig. 7, when the spool (3) is fitted to the flange (5), in such a way that the spool's (3) axis of rotation coincides with the centre of the tracks (P1, P2), the brushes (S1, S2) on the spool (3) are arranged on the conducting tracks (P1, P2) respectively on flange (5). The conductive trace (P1, P2) are electrically connected to an electric connector (8) via the respective electric cables (70) (Fig. 8), placed on the surface of the flange (5) turned towards the outside.

As shown in Fig. 1, the flange's (5) outer connector is connected to the receiver (Rx) via an electric cable (80), which receives the audio/video signal sent by the transmitter (Tx) via the wired transmission line (L). An acoustic speaker/video monitor can be connected to the receiver (Rx) in order to listen to the sounds and/or see pictures near the bait.

This way, even when the spool (3) turns on its axis to wind/unwind the fishing line assembly (G), the spool's brushes (S1, S2) turn in their respective tracks (P1, P2) on the fixed flange (5), ensuring continuity of the electric signal towards the fixed flange's external connector (8).

Fig. 9 illustrates a version of the spool (3) which has a core with a small diameter (31) and a core with a larger diameter (32), which together define housing around the smaller diameter (31). In the housing (30) there is a backing fishing line (25) up to the level of the core of the larger diameter (32). Therefore the fishing line assembly (G) is wound onto the core with the larger diameter (32) and the backing fishing line (25). The connector (4) is built into the core with the larger diameter (32) so it can be connected to the strands of the electrical wires (L1, L2).

Fig. 10 illustrates a spool wherein a radio transmitter (Tx2) is used instead of the sliding electric contacts, which is embedded into the body of the spool (3). The wireless transmitter (Tx2) communicates with the receiver (Rx) (Fig. 1), situated near the user. The rotation of the spool (3) does not interfere with the radio signal sent by the transmitter (Tx2).

In order to provide the transmitter (Tx2) with a power supply, there is housing (35) in the spool (3) for a battery pack (B). For the purpose of changing or recharging the battery (B) there is an opening with the battery housing (35) on the fixed flange (5). The opening (55) can be closed via a flap (56).

These construction models are open to numerous variations and changes within the capability of a technician in the field, which remain however within the scope of the invention, outlined by the appended claims.

## Claims

1. Fishing rod (100) comprising:
- a support rod (1) to be held by a user,
- a fishing line assembly (G) supported by this rod (1),
- a reel (M) connected to the rod (1) to wind/unwind the fishing line onto a spool (3), wherein the fishing line assembly (G) includes a wired transmission line (L) connected to a transmitter unit (Tx), comprising audio/video signal acquisition equipment, and transmission equipment to send this audio/video signal along the wired transmission line (L) wherein the spool (3) on the reel (M) comprises additional signal transmission equipment (S1, S2, Tx2) connected to the wired transmission line (L), to send the audio/ video signal to a receiver (Rx) placed near the user, **characterised in that** the spool (3) comprises a core with a small diameter (31) and a core with a larger diameter (32), which together define a housing (30) around the smaller diameter (31), wherein in the housing (30) there is a backing fishing line (25) up to the level of the core of the larger diameter (32) so that the fishing line assembly (G) is wound onto the core with the larger diameter (32) and onto the backing fishing line (25), wherein the wired transmission line (L) comprises a UTP cable with a couple of multi-wire cables (L1, L2) which are twisted and not shielded, wherein strands of the two UTP multi- wire cables (L1, L2) are attached to terminals of an electric connector (4) encased in the reel (3), wherein the connector (4) is built into the core of the larger diameter (32) so it can be connected to the strands.

2. Fishing rod (100) according to claim 1, **characterised in that** the additional signal transmission equipment (S1, S2) includes sliding electrical contact equipment which make electrical contact with another set of electrical contact equipment (P1, P2), arranged on a fixed flange (5) on the reel (M) and connected to an external connector (8), which can be connected to the receiver (Rx) via a cable.

3. Fishing rod (100) according to claim 2, **characterised in that** the sliding electrical contact equipment (S1, S2) in the spool (3) is a pair of conducting brushes (S1, S2), and the additional electrical contact equipment (P1, P2) on the fixed flange (5) on the reel (M) is a pair of circular conducting tracks arranged concentrically with respect to the spool's (3) axis of rotation.

4. Fishing rod (100) according to claim 1, **characterised in that** the additional signal transmission equipment (Tx2) includes a radio transmitter (Tx2) embedded in the body of the spool (3) to provide wireless communication with the receiver (Rx).

5. Fishing rod (100) according to claim 4, **characterised in that** in the body of the spool (3) there is a housing (35) for a battery pack (B) to provide the radio transmitter (Tx2) with a power supply.

6. Fishing rod (100) according to claim 5, **characterised in that** on a fixed flange (5) on the reel (M) there is an opening (55) with the battery housing (35) with a closable flap (56).

7. Fishing rod (100) according to any of the previous claims, **characterised in that** the additional transmission equipment (S1, S2, Tx2) in the spool (3) is connected electrically to the electric connector (4) embedded in the spool (3), to speed up the wired transmission line (L).

8. Fishing rod (100) according to claim 1, **characterised in that** the multi-wire cables (L1, L2) have no sheath and are covered with insulating enamel (23).

9. Fishing rod (100) according to any of the previous claims **characterised in that** the fishing line assembly (G) comprises a braided fishing line (2).

10. Fishing rod (100) according to any of the previous claims **characterised in that** the fishing line assembly (G) comprises a sheath (24) inside of which are the wired transmission line (L) and a fishing line (2).

11. Fishing rod (100) according to any of the previous claims **characterised in that** the spool (3) is assembled rotationally between two fixed flanges (4, 5).

## Patentansprüche

1. Angelrute (100), die Folgendes umfasst:
- eine von einem Benutzer zu haltende Stützrute (1),
- eine von dieser Rute (1) gestützte Angelschnuranordnung (G),
- eine Trommel (M), die mit der Rute (1) verbunden ist, um die Angelschnur auf einer Spule (3) aufzuwickeln oder von dieser abzuwickeln, wobei die Angelschnuranordnung (G) eine mit einer Sendereinheit (Tx) verbundene verdrahtete Übertragungsleitung (L) enthält, umfassend Audio-/Videosignalerfassungsgerät, und Übertragungsgerät zum Senden dieses Audio-/Videosignals entlang der verdrahteten Übertragungsleitung (L), wobei die Spule (3) auf der Trommel (M) ein zusätzliches Signalübertragungsgerät (S1, S2, Tx2) umfasst, das mit der verdrahteten Übertragungsleitung (L) verbunden ist, um das Audio-/Videosignal an einen nahe dem Benutzer platzierten Empfänger (Rx) zu senden, **dadurch gekennzeichnet, dass** die Spule (3) einen Kern mit einem kleinen Durchmesser (31) und einen Kern mit einem größeren Durchmesser (32) umfasst, die zusammen ein Gehäuse (30) um den kleineren Durchmesser (31) definieren, wobei sich im Gehäuse (30) eine Backing-Angelschnur (25) bis zur Höhe des Kerns des größeren Durchmessers (32) befindet, so dass die Angelschnuranordnung (G) auf den Kern mit dem größeren Durchmesser (32) und auf die Backing-Angelschnur (25) gewickelt wird, wobei die verdrahtete Ubertragungsleitung (L) ein UTP-Kabel mit mehreren mehradrigen Kabeln (L1, L2) umfasst, die verdrillt und nicht abgeschirmt sind, wobei Adern der beiden mehradrigen UTP-Kabel (L1, L2) an Anschlüssen eines elektrischen Verbinders (4) angeschlossen sind, der in der Trommel (3) untergebracht ist, wobei der Verbinder (4) in den Kern des größeren Durchmessers (32) eingebaut ist, so dass er mit den Adern verbunden werden kann.

2. Angelrute (100) nach Anspruch 1, **dadurch gekennzeichnet, dass** das zusätzliche Signalübertragungsgerät (S1, S2) ein gleitendes elektrisches Kontaktgerät enthält, das einen elektrischen Kontakt mit einem anderen Satz elektrischen Kontaktgeräts (P1, P2) herstellt, auf einem festen Flansch (5) auf der Trommel (M) angeordnet und mit einem externen Verbinder (8) verbunden, der über ein Kabel mit dem Empfänger (Rx) verbunden sein kann.

3. Angelrute (100) nach Anspruch 2, **dadurch gekennzeichnet, dass** das gleitende elektrische Kontaktgerät (S1, S2) in der Spule (3) ein Paar von leitenden Bürsten (S1, S2) ist und das zusätzliche elektrische Kontaktgerät (P1, P2) an dem festen Flansch (5) auf der Trommel (M) ein Paar von kreisförmigen leitenden Bahnen ist, die bezüglich der Rotationsachse der Spule (3) konzentrisch angeordnet sind.

4. Angelrute (100) nach Anspruch 1, **dadurch gekennzeichnet, dass** das zusätzliche Signalübertragungsgerät (Tx2) einen Funksender (Tx2) beinhaltet, der in den Körper der Spule (3) eingebettet ist, um eine drahtlose Kommunikation mit dem Empfänger (Rx) bereitzustellen.

5. Angelrute (100) nach Anspruch 4, **dadurch gekennzeichnet, dass** sich im Körper der Spule (3) ein Gehäuse (35) für ein Batteriepaket (B) befindet, um den Funksender (Tx2) mit einer Stromversorgung auszustatten.

6. Angelrute (100) nach Anspruch 5, **dadurch gekennzeichnet, dass** sich auf einem festen Flansch (5) auf der Trommel (M) eine Öffnung (55) mit dem Batteriegehäuse (35) mit einer verschließbaren Klappe (56) befindet.

7. Angelrute (100) nach einem der vorhergehenden Ansprüche, **dadurch gekennzeichnet, dass** das zusätzliche Übertragungsgerät (S1, S2, Tx2) in der Spule (3) elektrisch mit dem in die Spule (3) eingebetteten elektrischen Verbinder (4) verbunden ist, um die verdrahtete Übertragungsleitung (L) zu beschleunigen.

8. Angelrute (100) nach Anspruch 1, **dadurch gekennzeichnet, dass** die mehradrigen Kabel (L1, L2) keinen Mantel besitzen und mit einem Isolierlack (23) bedeckt sind.

9. Angelrute (100) nach einem der vorhergehenden Ansprüche, **dadurch gekennzeichnet, dass** die Angelschnuranordnung (G) eine geflochtene Angelschnur (2) umfasst.

10. Angelrute (100) nach einem der vorhergehenden Ansprüche, **dadurch gekennzeichnet, dass** die Angelschnuranordnung (G) einen Mantel (24) umfasst, in dem sich die verdrahtete Übertragungsleitung (L) und eine Angelschnur (2) befinden.

11. Angelrute (100) nach einem der vorhergehenden Ansprüche, **dadurch gekennzeichnet, dass** die Spule (3) drehbar zwischen zwei festen Flanschen (4, 5) montiert ist.

## Revendications

1. Canne à pêche (100) comprenant :
- une tige de support (1) tenue par un utilisateur ;
- un système de ligne de pêche (G) supporté par cette tige (1) ;
- un moulinet (M) connecté à la tige (1) afin d'enrouler/dérouler la ligne de pêche sur une bobine (3), lequel système de lige de pêche (G) comprend une ligne de transmission filaire (L) connectée à une unité d'émetteur (Tx) comprenant un équipement d'acquisition de signaux audio/vidéo et un équipement de transmission pour envoyer ce signal audio/vidéo le long de la ligne de transmission filaire (L), dans lequel la bobine (3) sur le moulinet (M) comprend un équipement de transmission de signal supplémentaire (S1, S2, Tx2) connecté à la ligne de transmission filaire (L) afin d'envoyer le signal audio/vidéo à un récepteur (Rx) situé à proximité de l'utilisateur, **caractérisée en ce que** la bobine (3) comprend un noyau de diamètre (31) réduit et un noyau de grand diamètre (32) qui définissent ensemble un boîtier (30) autour du diamètre réduit (31), lequel boîtier (30) contenant une ligne de pêche de secours (25) jusqu'au niveau du noyau du grand diamètre (32) de sorte que le système de ligne de pêche (G) est enroulé sur le noyau de grand diamètre (32) et sur la ligne de pêche de secours (25), tandis que la ligne de transmission filaire (L) comprenant un câble UTP comprenant deux câbles multibrins (L1, L2) torsadés et non gainés, les brins des deux câbles UTP multibrins (L1, L2) étant fixés aux bornes d'un connecteur électrique (4) logé dans la bobine (3), et le connecteur (4) étant intégré dans le noyau du grand diamètre (32) de sorte qu'il puisse être connecté aux brins.

2. Canne à pêche (100) selon la revendication 1, **caractérisée en ce que** l'équipement de transmission de signal supplémentaire (S1, S2) comprend un équipement de contact électrique coulissant en contact électrique avec un autre ensemble d'équipement de contact électrique (P1, P2) disposé sur un flanc fixe (5) sur le moulinet (M) et connecté à un connecteur externe (8) pouvant être connecté au récepteur (Rx) par un câble.

3. Canne à pêche (100) selon la revendication 2, **caractérisée en ce que** l'équipement de contact électrique coulissant (S1, S2) dans la bobine (3) consiste en une paire de balais conducteurs (S1, S2) et **en ce que** l'équipement de contact électrique supplémentaire (P1, P2) sur le flanc fixe (5) sur le moulinet (M) consiste en une paire de pistes conductrices circulaires disposées de manière concentrique par rapport à l'axe de rotation de la bobine (3).

4. Canne à pêche (100) selon la revendication 1, **caractérisée en ce que** l'équipement de transmission de signal supplémentaire (Tx2) comprend un émetteur radio (Tx2) intégré dans le corps de la bobine (3) afin d'assurer une communication sans fil avec le récepteur (Rx).

5. Canne à pêche (100) selon la revendication 4, **caractérisée en ce que** dans le corps de la bobine (3) se trouve un boîtier (35) pour un pack de batterie (B) en vue de l'alimentation de l'émetteur radio (Tx2).

6. Canne à pêche (100) selon la revendication 5, **caractérisée en ce que**, sur un flanc fixe (5) sur le moulinet (M) se trouve une ouverture (55) dans le logement de batterie (35) avec un couvercle de fermeture (56).

7. Canne à pêche (100) selon l'une quelconque des revendications précédentes, **caractérisée en ce que** l'équipement de transmission supplémentaire (S1, S2, Tx2) dans la bobine (3) est connecté électriquement au connecteur électrique (4) intégré dans la bobine (3) afin d'accélérer la ligne de transmission filaire (L).

8. Canne à pêche (100) selon la revendication 1, **caractérisée en ce que** les câbles multibrïns (L1, L2) ne comportent pas de gaine et sont recouverts par un émail isolant (23).

9. Canne à pêche (100) selon l'une quelconque des revendications précédentes, **caractérisée en ce que** le système de ligne de pêche (G) comprend une ligne de pêche tressée (2).

10. Canne à pêche (100) selon l'une quelconque des revendications précédentes, **caractérisée en ce que** le système de ligne de pêche (G) comprend un fourreau (24) à l'intérieur duquel se trouvent la ligne de transmission filaire (L) et une ligne de pêche (2).

11. Canne à pêche (100) selon l'une quelconque des revendications précédentes, **caractérisée en ce que** la bobine (3) est montée en rotation entre deux flancs fixes (4, 5).
